# EUROPEAN PATENT APPLICATION

(11) **EP 0 611 135 A1**
(43) Date of publication of application: **17.08.1994**
(21) Application number: 94300909.2
(22) Date of filing: 08.02.1994
(51) Int. Cl.: G06F 3/16

(54) **Multi-lingual voice response unit**

(30) Priority: 08.02.1993 US 14819
(71) Applicant: INTERVOICE, INC., Dallas, Texas 75252 (US)
(72) Inventor: Boyle, David Michael, Allen, Texas 75002 (US)
(74) Representative: Howick, Nicholas Keith

(57) **Abstract**

A multi-lingual voice response unit apparatus and method are disclosed. The apparatus comprises selection circuit means for selecting one of a plurality of stored spoken human languages in response to input in a particular spoken human language received from a user and voice response circuit means for subsequently responding to the user in the selected one of the plurality of spoken human languages. In this manner, interaction between the user and the voice response unit of the present invention is entirely by means of spoken words, relieving the user of the need to interact with the voice response unit by means of mechanically-produced pulses or tones or by any other mechanical means.

## Description

### TECHNICAL FIELD OF THE INVENTION

This invention is directed to a multi-lingual voice response unit and, more particularly, to a voice response unit which has the capacity to respond in a selectable one of a number of languages depending upon a spoken input from a user.

### BACKGROUND OF THE INVENTION

Voice response units, in the general sense, are not new. A voice response unit is defined to be a device which has the capacity to respond in a stored and prerecorded or synthesized human voice to commands received from a user. Voice response units are typically coupled to a telephone system to thereby allow a remote user to call the voice response unit and query it for information in voice form. Voice response units typically receive their information to answer the user's queries by querying a database coupled to the voice response unit and deliver that information to the user in spoken voice.

In traditional voice response units, the voice response unit receives a command from the user in the form of pulses or tones created by a standard telephone instrument and, with the aid of relatively simple decoding circuitry, translates the pulses or tones into a machine-processable format. The voice response unit then parses the user's query to derive therefrom a query suitable for accessing the database attached to the voice response unit. Having retrieved information from the database, the voice response unit combines the data received from the database with stored words or phrases to produce thereby a stream of spoken words which the voice response unit then transmits, by means of a voice synthesizer, to the user over the telephone system. In this manner, the user can maintain a type of dialog with the voice response unit, enabling the user to "ask questions" and receive vocal answers from a remote database.

One of the problems encountered and solved in the prior art arose in connection with the requirement that the user supply pulses or tones to interact with the voice response unit. In recent years, voice recognition systems have been designed which integrate voice response units and voice recognition units. These voice recognition units, when coupled to voice response units, allow a true voice "conversation" to occur between the user and the voice response unit. Unfortunately, unlike in the case in which the user communicates via standardized pulses or tones, people communicate vocally in many different languages. Thus, a voice response unit which has been programmed to respond exclusively in English is useless to a user who only speaks French. Therefore, it has been the desire of designers in the past to provide voice response units which have the capacity to interact with users in any selectable one of a group of languages. In fact, voice response units have been designed to accommodate this requirement by providing for multiple languages which can be alternatively selected to enable the voice response unit to interact with users in many languages. However, these prior art voice response units suffered in that they still relied on prompting the caller to initially ascertain the spoken language the user wished to use in interacting with the voice response unit. Therefore, the prior art was inadequate in that it failed to provide a voice response unit which was able to interact with a user speaking any one of several languages solely via spoken voice of the user's specific language, rather than requiring the user to resort at some point to interacting with the voice response unit via pulses, tones or voice means using a preselected default language.

### SUMMARY OF THE INVENTION

Accordingly, it is a primary object of the present invention to provide a multi-lingual voice response unit in which the voice response unit has the capacity to determine the language a user prefers to use based on input in a particular spoken human language received from the user. In this manner, the multi-lingual voice response unit is the first to comprise selection circuitry for selecting one of a plurality of stored spoken human languages in response to input in a particular spoken human language received from a user and voice response circuitry for subsequently responding to the user in the selected one of the plurality of spoken human languages.

It is a further object of the present invention to provide a multi-lingual voice response unit further comprising voice generation circuitry for prompting a user to provide information regarding which spoken human language the user prefers. The prompting is typically provided in the form of a spoken question posed to the user requiring a "yes" answer in one of a plurality of languages. Based on an interpretation of the user's response, the voice response unit selects an appropriate language to use subsequently in interacting with the user.

Another object of the present invention is to provide a multi-lingual voice response unit further comprising means for converting input from a user in a particular spoken human language into a machine-recognizable form. As mentioned before, this is typically the function of a voice recognition unit as part of a voice response system.

Yet another object of the present invention is to provide a multi-lingual voice response unit comprising means for parsing input from a user in a particular spoken human language to determine if the input is in a selected one of the plurality of the spoken human languages. This allows the voice response unit, once it has converted the user's response to machine-recognizable form, to decide whether the user's response is valid and represents one of the languages in which the voice response unit is designed to communicate.

Still another object of the present invention is to provide a multi-lingual voice response unit further comprising means for rejecting input from a user if the input is not in a selected one of a plurality of spoken languages. In this event, the voice response unit either switches the user over to a live operator or disconnects the user, depending upon how the voice response unit has been programmed.

Still a further object of the present invention is to provide a multi-lingual voice response unit comprising means for coupling the unit to a database, the database enabling the unit to reply to input received from a user. The database can be of conventional design, wherein the database is governed by a database manager having the capacity to accept queries from the voice response unit and elicit information from the database by addressing the data required. The database manager responds with the data the voice response unit requested. The database and voice response unit can be under common control of a single general purpose computer or can be separate from one another and coupled by a bus or communication line.

Yet a further object of the present invention is to provide a multi-lingual voice response unit further comprising means for coupling the unit to a telephone system, the telephone system enabling the unit to communicate with remote users over a telephone line. Therefore, the voice response unit has the capacity to call or be called via the telephone system. Connection to the telephone system is typically by means of telephone interface hardware coupled to the voice response unit.

Another object of the present invention is to provide a multi-lingual voice response unit further comprising memory means for storing a plurality of stored spoken human languages. The memory means is of a type which is well known in the art and can be read-only memory, random access memory or drum, tape or disk secondary storage, among other things.

An another object of the present invention is to provide a multi-lingual voice response unit wherein a means for selecting comprises pointer means for providing a selectable address offset, the pointer means allowing selectable addressing of corresponding phrases in a plurality of spoken human languages. In the preferred embodiment of the present invention, the memory means which stores the various languages is divided into a plurality of partitions, each partition corresponding to one of the languages. Within each partition is stored a plurality of words or phrases, each individually addressable.

Words or phrases which are equivalent in the different languages are stored in the same relative position within each partition. In other words, "hello," "buenos dias" and "bonjour" may be stored in a first group of bytes in each partition. This enables a person programming the voice response unit to deal with a single language in formulating the responses the person wishes the voice response unit to provide to a user during a particular interaction. By providing a simple address offset, the voice response unit then simply substitutes the selected foreign language equivalent for each of the words or phrases originally desired.

And another object of the present invention is to provide a multi-lingual voice response unit in which the unit is embodied in a programmed general purpose computer. Of course, the voice response unit will contain special-purpose telephone interface circuitry to allow the voice response unit to communicate via a telephone system, receiving and interpreting spoken language and generating spoken language. Apart from this, the functions of the multi-lingual voice response unit can be implemented in software and programmed into a general purpose computer to enable the general purpose computer to perform accordingly. Obviously, the voice response unit could be implemented in special-purpose hardware, but such is not necessary.

In the attainment of the foregoing, the preferred embodiment of the present invention is a multi-lingual voice response system implemented in a general purpose computer, comprising: 1) voice generation circuit means for prompting a user to provide information regarding which spoken human language the user prefers, 2) memory means for storing a plurality of spoken human languages, 3) selection circuit means for selecting one of the plurality of stored spoken human languages in response to input in a particular spoken human language received from the user, the selection of the circuit means including pointer means for providing a selectable address, to thereby allow selectable addressing of corresponding phrases in the plurality of spoken human languages, 4) means for converting the input in the particular spoken human language into a machine-readable form, 5) means for parsing the input to determine if the input is in the selected one of the plurality of spoken human languages, 6) means for rejecting the input if the input is not in the selected one of the plurality of spoken human languages, 7) means for coupling the apparatus to a database, the database enabling the apparatus to reply to input received from the user, 8) voice response circuit means for subsequently responding to the user in the selected one of the plurality of spoken human languages and 9) means for coupling the apparatus to a telephone system, the telephone system enabling the apparatus to communicate with a remote user over a telephone line.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 is a representation of the multi-lingual voice response system of the present invention;
FIGURE 2 is a flow diagram outlining operation of the multi-lingual voice response system of the present invention;
FIGURE 3 is a representation of a first alternative programming screen for the multi-lingual voice response unit of the present invention;
FIGURE 4 is a representation of a further programming screen for the multi-lingual voice response unit of the present invention;
FIGURE 5 is a representation of a further programming screen for the multi-lingual voice response unit of the present invention;
FIGURE 6 is a representation of a further programming screen for the multi-lingual voice response unit of the present invention; and
FIGURE 7 is a representation of a second alternative programming screen for the multi-lingual voice response unit of the present invention.

### DETAILED DESCRIPTION OF THE INVENTION

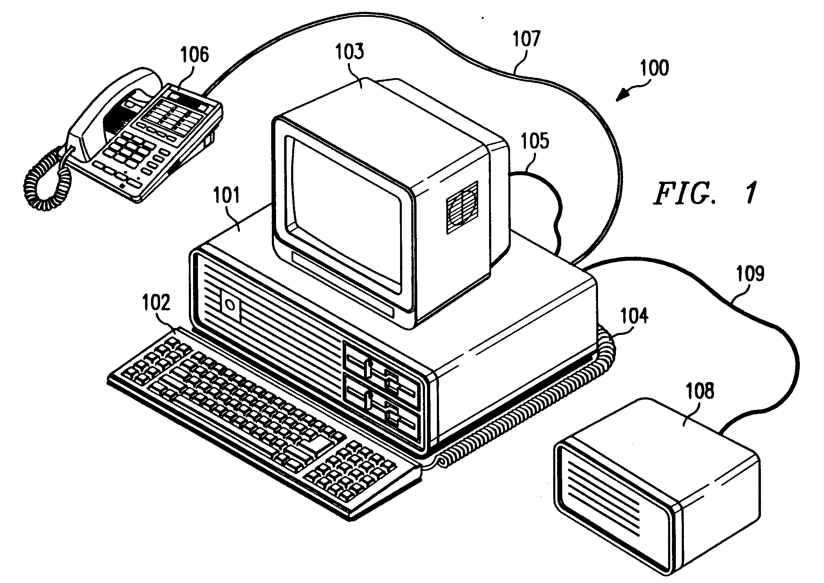

Turning now to FIGURE 1, shown is a general purpose computer 100, which in the preferred embodiment of the present invention is a general purpose microcomputer, or personal computer. The computer 100 comprises a central processing unit 101, a keyboard 102 and a video display device or cathode ray tube 103. The keyboard 102 is coupled to the central processing unit 101 by means of a cable 104, while the cathode ray tube 103 is coupled to the central processing unit 101 by means of a cable 105. A telephone system 106 is coupled to the central processing unit 101 by means of a bus 107. Telephone interface circuitry, which allows the computer 100 to communicate through the telephone system 106 can be located either in the telephone system 106 or in the computer 100. The telephone interface circuitry is of standard design. A database 108 is coupled to the central processing unit 101 by means of a bus 109. As shown in FIGURE 1, the database 108 is separate from the computer 100. However, it is within the scope of the present invention to store the database 108 within the computer 100 as a part thereof. However, for representational purposes, the database 108 is shown as being separate from the computer 100.

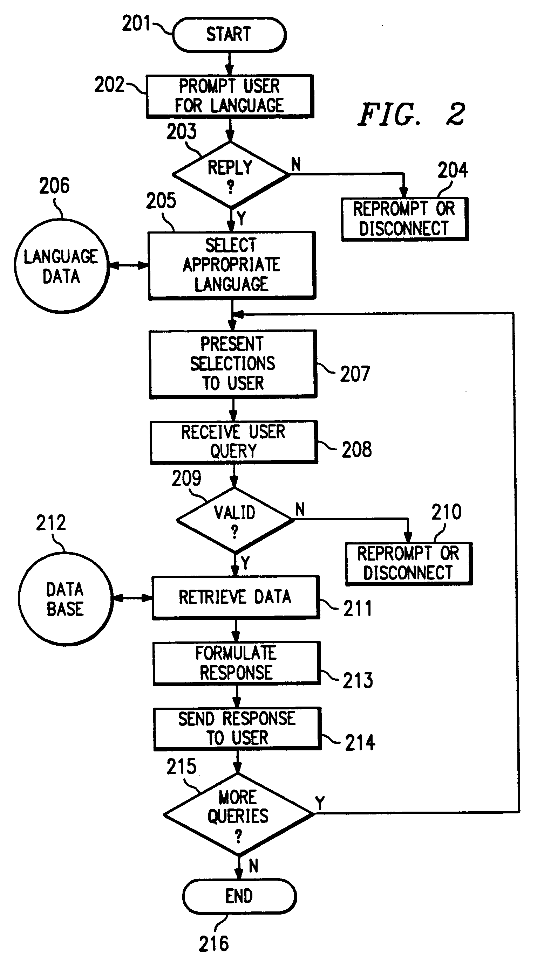

Turning now to FIGURE 2, shown is a block diagram of the multi-lingual voice response system of the present invention. The flow diagram represented in FIGURE 2 is designed to begin when a connection has been completed between the voice response unit and a user via a telephone system. Therefore, the block diagram represented in FIGURE 2 begins with a start block 201. A "prompt user for a language" block 202 enables the voice response unit to direct a spoken question to the user prompting the user to reply in a spoken voice to the question. A question is asked such as: "for English say 'yes,' para Espanol dice 'si'." Based on the user's selection, the voice response unit will play messages in the selected language and will expect the user to respond to all subsequent prompts in the selected language.

A "reply?" decision block 203 decides whether a user's input is suitable or not. If not, processing continues at a "reprompt or disconnect" block 204. If the user's reply is valid, then processing continues at a "select appropriate language" block 205. An appropriate language, comprising a plurality of words or phrases arranged in various response fields in retrieved from a Language database 206 which, in the preferred embodiment of the present invention, is attached via a bus to the computer 100 of FIGURE 1. The voice response unit can retrieve language data from the language database 206 as needed.

Following selection of an appropriate language, processing proceeds to a "present selections to user" block 207, which allows the voice response unit to present a menu of selections, via the voice response units spoken voice to the user, such as (in English) "say 'one' for checking information, or say 'two' for savings information." The voice response unit then waits for the user's response in a "receive user query" block 208. The user's response, therefore, to the "present selections to user" block 207 is in the form of a spoken query, such as (in English) "one." the voice response unit decides whether the user's query is valid in a "valid?" decision block 209. If the query is invalid, processing is continued in a "reprompt or disconnect" block 210. If, on the other hand, the query is valid, processing continues in a "retrieve data" block 211. In the "retrieve data" block 211, the voice response unit formulates, from the user's query, a query suitable for passage to a database manger, which is in control of a database 212, which, in turn, allows the voice response unit to answer the user's query.

Accordingly, data retrieved from the database 212 via the database manager is combined with phrases retrieved from the language database 206 to formulate a response to the user's query in a "formulate response" block 213. The response, thus formulated, is processed through a voice synthesizer and transmitted to the user via a "send response to user" block 214. The response is sent to the user via the telephone system 106 of FIGURE 1. The user thereby receives the answer to his question. A "more queries?" decision block 215 allows the user to pose further queries to the voice response unit, if the user elects to do so. If not, processing ends in an "end" block 216, at which point the call between the user and the voice response unit is usually terminated.

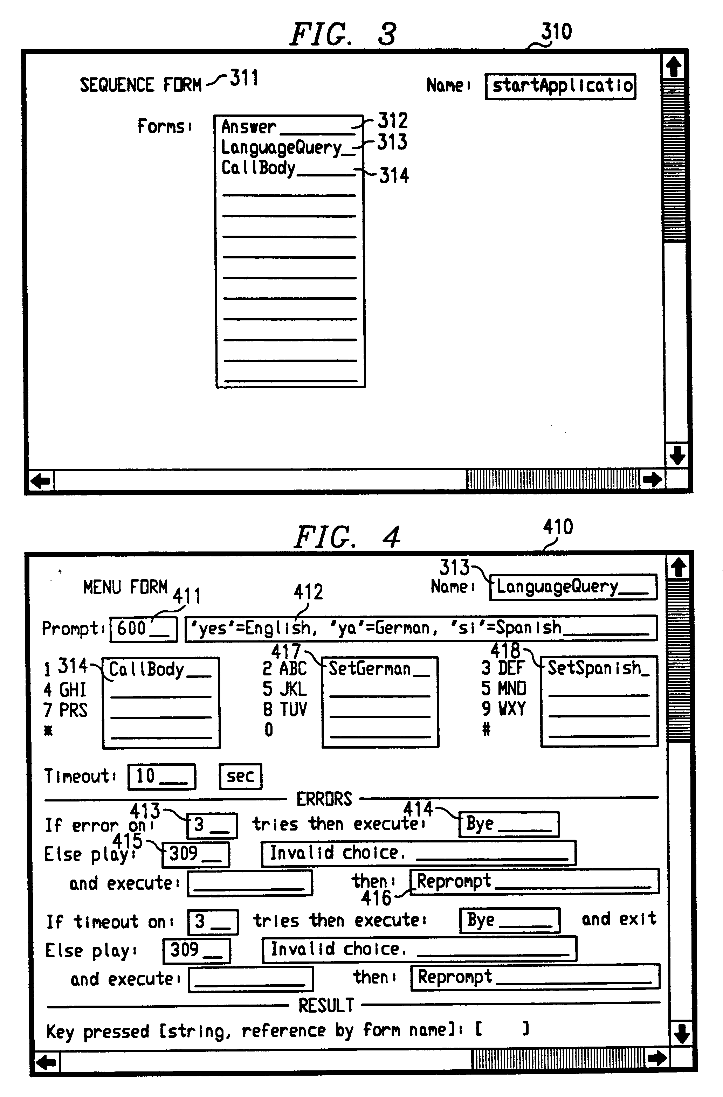

Turning now to FIGURE 3, shown is a first alternative programming screen used in programming the multi-lingual voice response unit of the present invention. The screen, generally designated 310, is named: "Sequence Form" 311. The "Sequence Form" 311 governs the order of operation of various routines the voice response unit must perform during operation. Specifically, as shown in FIGURE 3, the voice response unit has been directed to 1) answer, 2) query for a particular spoken language and 3) handle user queries, via 1) "Answer" routine 312, 2) "LanguageQuery" routine 313 and 3) "CallBody" routine 314.

Turning now to FIGURE 4, shown is a further programming screen, designated 410. This screen is a "MenuForm" screen of the name: "LanguageQuery" 313. Therefore, this screen 410 is called in response to entry of "LanguageQuery" 313, as shown in FIGURE 3. The screen 410 comprises a prompt number 411, a prompt language 412 and various actions to be taken in response to a user's response to the language query. The "LanguageQuery" routine 313 begins by prompting a user to determine what human spoken language the user desires to use in interacting with the voice response unit. The voice response unit can be programmed to give the user a certain preselected number of tries in which to successfully answer the voice response unit's language query.

As shown in FIGURE 4, the voice response unit has been programmed to give the user three tries, as shown in field 413 and then execute the routine "Bye," which presumably disconnects the call in the event of three failures, as directed in field 414. If the user, for some reason, fails to give an appropriate response to the query, the voice response unit, as shown in FIGURE 4, has been programmed to play message 309, corresponding to the spoken words "invalid choice,", as evidenced in field 415. (Recall that, if the user selects a language other than English, message 309 will be offset by a fixed amount to result in the playing of a corresponding message in the selected foreign language.) Finally, the voice response unit has been programmed to reprompt the user to supply an acceptable response via field 416. Of course, these fields 413, 414, 415, 416 can be programmed in any one of a number of ways to achieve a desired result.

As seen in FIGURE 4, for example, programming has also been supplied in the event of a time-out, whereby upon passage of a predetermined amount of time, if the voice response unit does not receive an answer from the caller, the voice response unit has been programmed to re-prompt three times and then disconnect the call.

If the voice response unit receives a suitable response, it executes one of a plurality of routines, depending upon the nature of the response. For instance, as shown in FIGURE 4, if the user has replied to the "language query" routine 313 by specifying German (by answering "two") as a preferred language, the voice response unit proceeds to "SetGerman" routine 417. If, on the other hand, the user specifies Spanish (by answering "three") as a preferred language, the voice response unit is programmed to proceed to "SetSpanish" routine 418. Finally, if the user specifies English (by answering "one") as a preferred language, the voice response unit is programmed to proceed directly to "CallBody" routine 419. Note in FIGURES 3 and 4 that "SetGerman" routine 417 and "SetSpanish" routine 418 are used only when those respective foreign languages are specified. If English is specified, the voice response unit proceeds directly to the "CallBody" routine 419. As shown in FIGURE 3, the "CallBody" routine 314 is called after execution of the "LanguageQuery" routine 313. Therefore, if English is specified, the "LanguageQuery" routine 313 terminates early.

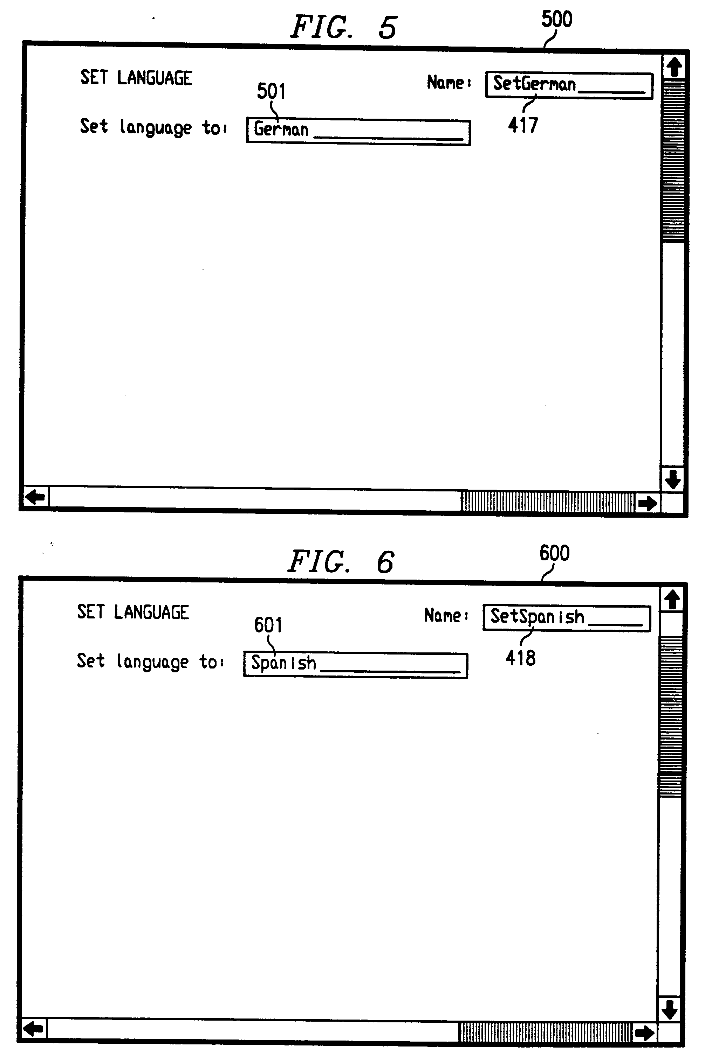

Turning now to FIGURE 5, shown is a further programming screen for the multi-lingual voice response unit of the present invention. Specifically, FIGURE 5 shows a screen 500 which is a "SetLanguage" screen of the name: "SetGerman" 417. In the example shown in FIGURE 5, a field 501 has been set to enable the German language in response to enablement of the "set German" routine 417.

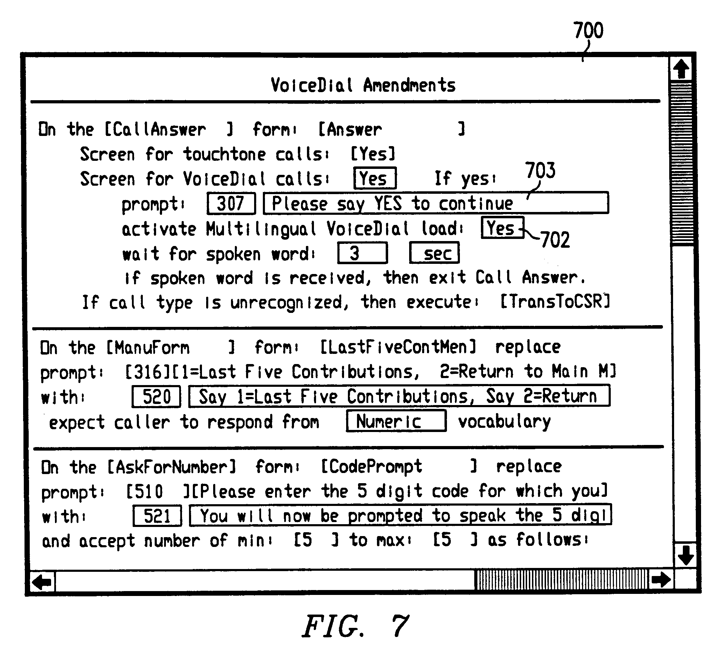

Turning now to FIGURE 6, shown is a corresponding screen 600, which is a "SetLanguage" screen of the name: "SetSpanish" 418. In this instance, a field 501 has been completed to designate Spanish as the language to be selected in response to activation of the "SetSpanish" routine 418.

Turning now to FIGURE 7, shown is a second alternative programming screen for the multi-lingual voice response unit of the present invention. A screen 700 is presented to the user which contains an "activate multilingual VoiceDial load:" prompt 702. If this prompt 702 is set to "yes," the multi-lingual function of the VRU is enabled and a message prompt 703 is set to deliver a message to the caller: "For English say 'yes,' francais diet 'oui'.". This allows the VRU to respond in languages appropriate to the caller. If the prompt 702 is set to "no," the prompt 703 is simply set to deliver a message to the caller: "Please say 'yes' to continue" to simply allow the caller to enter the "CallBody" routine without an option of use of multiple languages.

The "CallBody" routine forms the bulk of the processing the voice response unit will perform during interaction with a user in a typical call session. The "CallBody" routine handles queries from the user and responses to the user as derived from a database as previously described. All of the responses a voice response unit gives to a user must be programmed by a programmer. The responses, in the form of words or phrases stored in the language database, are given a unique addressable number, as previously shown in FIGURE 4, to access a particular word or phrase. And, as previously described, since corresponding words and phrases are stored in corresponding partitions in the language database, all that is needed to effect a change of language is an offset in the addressed used to access a particular word or phrase. For instance, if, in the language database, all English words or phrases are addressed between 0 and 999 and all German words and phrases are addressed between 1000 and 1,999, and if "Do you speak English?" is phrase number 500, then "Spraken zie Deutch?" is stored as phrase number 1,500. Accordingly, all that is needed to change languages from English to German is to offset the English address by 1,000. Therefore, phrase 500 becomes phrase 1,500 and German is enabled. Furthermore, if Spanish words and phrases occupy addresses 2,000 to 2,999, an offset of 2,000 would enable the voice response unit to respond in Spanish (viz. "Se habla Espanol?"). The "SetGerman" and "SetSpanish" routines 417, 418 provide the address offset.

The address offset is an important feature aspect of the present invention in that it allows the voice response unit to be programmed with reference to a single language and without regard to the presence or absence of alternative foreign languages. Accordingly, the programmer need only think about the programmer's mother tongue when programming the voice response unit, relying on the mechanics of the address offset feature of the multi-lingual option to handle changes in language in a mechanical fashion.

From the foregoing, it is apparent that the present invention is the first to provide a multi-lingual voice response unit which allows a user to select a particular preferred language by simply speaking the selected language to the voice response unit, the voice response unit selecting a language in response to the user's spoken words. In this manner, interaction between the user and the voice response unit is entirely oral, without the necessity of employing mechanical pulse or tone-producing devices to accomplish communication between the user and the voice response unit.

In particular, the multi-lingual voice response unit comprises selection circuitry for selecting one of a plurality of stored spoken human languages in response to input in a particular spoken human language received from a user and voice response circuitry for subsequently responding to the user in the selected one of the plurality of spoken human languages.

Although the present invention and its advantages have been described in detail, it should be understood that various changes, substitutions and alterations can be made herein without departing from the spirit and scope of the invention as defined by the appended claims.

## Claims

1. A multi-lingual voice response unit apparatus, comprising:
selection circuit means for selecting one of a plurality of stored spoken human languages in response to input in a particular spoken human language received from a user;
voice response circuit means for subsequently responding to said user in said selected one of said plurality of spoken human languages;
means for retrieving information stored within a database coupled to said apparatus in response to a user request in said selected one of said plurality of spoken human languages; and
means for formulating and transmitting a reply to said user in said selected one of said plurality of spoken human languages, said reply including said retrieved information.

2. The apparatus as recited in Claim 1 further comprising voice generation circuit means for prompting said user to provide information regarding which spoken human language said user prefers.

3. The apparatus as recited in Claim 1 further comprising means for parsing said input in said particular spoken human language to determine if said input is in said selected one of said plurality of spoken human languages.

4. The apparatus as recited in Claim 1 further comprising means for rejecting said input if said input is not in said selected one of said plurality of spoken human languages.

5. The apparatus as recited in Claim 1 further comprising means for coupling said apparatus to a telephone system, said telephone system enabling said apparatus to communicate with remote users over a telephone line.

6. The apparatus as recited in Claim 1 further comprising memory means for storing said plurality of stored spoken human languages.

7. The apparatus as recited in Claim 1 wherein said means for selecting comprises pointer means for providing a selectable address offset, said pointer means allowing selectable addressing of corresponding phrases in said plurality of spoken human languages.

8. The apparatus as recited in Claim 1 wherein said apparatus is embodied in a programed general purpose computer.

9. A multi-lingual voice response system implemented in a general purpose computer, comprising:
voice generation circuit means for prompting a user to provide information regarding which spoken human language said user prefers;
memory means for storing a plurality of spoken human languages;
selection circuit means for selecting one of said plurality of stored spoken human languages in response to input in a particular spoken human language received from said user, said selection circuit means including pointer means for providing a selectable address, to thereby allow selectable addressing of corresponding phrases in said plurality of spoken human languages;
means for converting said input in said particular spoken human language into a machine-recognizable form;
means, coupled to said converting means, for retrieving information from a database coupled to said apparatus in response to a user request for said information in said selected one of said plurality of spoken human languages;
means for formulating and transmitting a reply to said user in said selected one of said plurality of spoken human languages, said reply including said retrieved information;
means for rejecting said input if said input is not in said selected one of said plurality of spoken human languages;
voice response circuit means for subsequently responding to said user in said selected one of said plurality of spoken human languages; and
means for coupling said apparatus to a telephone system, said telephone system enabling said apparatus to communicate with a remote user over a telephone line.

10. A multi-lingual voice response unit apparatus, comprising:
selection circuit means for selecting one of a plurality of stored spoken human languages in response to input in a particular spoken human language received from a user;
voice response circuit means for subsequently responding to said user in said selected one of said plurality of spoken human languages; and
means for converting said input in said particular spoken human language into a machine-recognizable form.

11. A method of operation for a multi-lingual voice response unit apparatus, comprising the steps of:
selecting one of a plurality of stored spoken human languages in response to input in a particular spoken human language received from a user;
subsequently responding to said user in said selected one of said plurality of spoken human languages; and
converting said input in said particular spoken human language into a machine-recognizable form.
